# EUROPEAN PATENT SPECIFICATION

(11) **EP 3 967 909 B1**
(45) Date of publication and mention of the grant of the patent: **16.10.2024**
(21) Application number: 20196179.4
(22) Date of filing: 15.09.2020
(51) Int. Cl.: F16K 27/00

(54) **FIXATION U-PLATE FOR SET OF SOLENOID VALVES**
BEFESTIGUNGS-U-PLATTE FÜR EINEN SATZ VON MAGNETVENTILEN
PLAQUE DE FIXATION EN U POUR ENSEMBLE ÉLECTROVANNES

(43) Date of publication of application: 16.03.2022
(73) Proprietor: ZF CV Systems Europe BV, 1170 Brussels (BE)
(72) Inventor: Salatycki, Mateusz, 45-223 Opole (PL); Socha, Przemyslaw, 53-311 Wroclaw (PL)
(74) Representative: Rabe, Dirk-Heinrich

(56) References cited:
- EP-A1- 0 691 250
- EP-A1- 1 674 675
- EP-A2- 1 437 532
- WO-A1-2019/142021
- US-A1- 2015 276 080

## Description

The invention relates to a valve fixation device for fixing solenoid valves to a valve block, in particular a valve block for automated manual transmission, the fixation device comprising a plate body having a plurality of solenoid openings for granting access to said solenoid valves, see claim 1.

Moreover, the invention relates to a solenoid valve arrangement comprising such a valve fixation device and a commercial vehicle comprising a solenoid valve arrangement of the aforementioned type, see respectively claims 8, 11 and 12. Valve arrangements according to the aforementioned type are used in automated manual transmissions in personal vehicles or commercial vehicles. Automated manual transmission can be automatic or semi-automatic and can be activated by different actuators. In the present case, the automated manual transmission is activated by solenoid valves which are arranged in a valve block. When mounting such solenoid valves to the valve block, it is important to clamp those solenoid valves with the correct clamping force against the valve block. The prior art uses a fixation plate having a plate body which is screwed against the solenoid valves, for fixing them to the valve body. To limit the clamping force, for each screw a respective bushing is provided. In typical arrangements, 5 to 8 solenoid valves may be provided in one row, for example 7, and typical arrangement include two of those rows. For fixing the solenoid valves to the valve block, for each solenoid valve two screws are provided. Thus, in case where 14 solenoid valves are to be clamped against the valve body, 28 screws are required. Thus, in the prior art, also 28 bushings are required and each of the 28 screws has to be screwed against the valve block using the correct and respective clamping force.

A drawback in the prior art in particular lies in the tolerance chain for each of the solenoid valves. Each solenoid valve has a tolerance with the valve block and for each solenoid valve 2 bushings are provided. Each bushing has a tolerance when seating against the valve block and a second tolerance between the bushings and the plate body. Then, a further tolerance is between the respective screws and the valve body which in total can result in different clamping forces between different solenoid valves, even though the same torque is used. Therefore, it is an object of the present invention to simplify the mounting process, in particular to reduce tolerance chains.

EP1437532A2 relates to a fluid pressure manifold equipped with electrically operated valves for selectively providing pressurized fluid to individual outlet ports on the manifold.

WO2019142021 A1 generally relates to a valve assembly for use in an actuation assembly coupled to a transmission of a vehicle.

EP0691250A1 relates to solenoid coil assemblies and more particularly to the packaging of solenoid coil assemblies for use with an automotive antilock braking system.

According to a first aspect of the invention, the problem is solved by a valve fixation device with the features of claim 1. In particular a valve fixation device comprises at least a first leg at a first side of said plate body integrally formed with said plate body and extending substantially perpendicular therefrom, and at least a second leg at a second side of said plate body opposite said first side integrally formed with said plate body and extending substantially perpendicular therefrom. Said first leg comprises a first abutment surface for abutting against said valve block when in a mounted state, and said second leg comprises a second abutment surface for abutting against said valve block when in a mounted state. Said first leg has a first length and said second leg has a second length for clamping said solenoid valves against said valve body.

The present invention is based on the idea that forming first and second legs integrally with said plate body and extending therefrom provides two core benefits: on the one hand, at least one tolerance in the tolerance chain is avoided, namely the tolerance between the bushing and the plate body, and on the other hand, the part count is reduced and therefore the mounting process is also greatly simplified, since the bushings which have been used previously are not necessary any more. It can be provided that for each and every solenoid valve a respective pair of first and second legs is provided, or that only 1, 2, 3 or 4 pairs of first and second legs are provided in total. Preferably, the first and second legs are parallel to each other and thus include with the substantially plate-shaped plate body a rectangular angle. Preferably, the legs each are substantially straight and arranged such that a clamping force is parallel to the direction in which the first and second legs are extending.

The term "integrally formed" in this instance can mean that the first and second legs are attached to the plate body e.g. by welding, gluing or soldering, but preferably means that the plate body and the first and/or second legs are made from one piece and formed in a one-piece construction. In this instance, it is preferred that the plate body, the first leg and the second leg are formed from one metal plate by means of bending. The metal plate, out of which the plate body, the first and second legs are made, first comes in a flat shape and then from first and second sides of this metal plate, the first and second legs are bent into their final direction. This allows for a simple manufacturing process and reliably avoids at least one of the tolerances, and also achieves a stiff overall construction.

The first length of the first leg and the second length of the second leg are preferably measured with respect to the plate body and perpendicular to the plate body. The first and second lengths of the first and second legs define a distance between the plate body and the valve block. Thus, the first and second lengths of the first and second legs form a stop for the plate body, when fixing the plate body against the valve block and thus also limit a force by which the solenoid valves are clamped against the valve block. In case third, fourth and so forth legs are provided, their respective lengths are preferably set accordingly.

According to a preferred embodiment, said first and second legs extend substantially completely along said first and second sides of said plate body, respectively. Thus, said first and/or second legs preferably extend along the whole width of said plate body. The solenoid valves are preferably arranged in a row and the plate body covers all of the solenoid valves. The width direction of the plate body thus is the direction of aligning those solenoid valves. The first and second legs thus extend preferably along the whole row of solenoid valves, each leg on one side of the solenoid valves. It could also be provided that only two pairs of first and second legs are provided, which in this case preferably are arranged at end portions in width direction of the plate body.

Further preferred, the plate body comprises spring biased lashes for contacting said solenoid valves. Also, those lashes may help to keep the clamping force in a predetermined certain range, so not to exceed a desired clamping force. The lashes can be formed integrally with the plate body, preferably by means of blanking. The whole valve fixation device can be formed by means of blanking and bending.

Further, it is preferred that the valve fixation device comprises at least one through hole for receiving a screw for screwing said valve fixation device to said valve block. This through hole could be placed anywhere, in particular in the plate body, the first leg, or the second leg. If the through hole is placed in the first or the second leg, the first and/or the second leg are preferably provided with a respective screwing lash, or screwing tongue which is attached to and projects from the first and/or second leg.

Preferably, a plurality of through holes for a plurality of screws are provided. Preferably, at least four of those through holes are provided, to provide a clamping force which is substantially evenly distributed over the plate body.

Preferable, the plurality of through holes is provided in the plate body, so that the through holes are between the first and second legs. Due to such an arrangement, the first and the second legs may protect the screws provided through the through holes and therefore secure the device further. Moreover, this may prevent service personnel to contact the screws and/or solenoid valves. Thus, also safety may be increased, and also the solenoid valves may be better protected from the environment by means of the first and second legs. According to a second aspect of the invention, the above-mentioned problem is solved by a solenoid valve arrangement for automated manual transmission (see claim 8), comprising a valve block, a plurality of solenoid valves received in respective recesses of said valve block, and a valve fixation device according to any of the previously described preferred embodiments of a valve fixation device according to the first aspect of the invention which is attached to said valve block for fixing said solenoid valves to said valve block. It shall be understood that the valve fixation device according to the first aspect of the invention and the solenoid valve arrangement according to the second aspect of the invention have similar and identical preferred embodiments which are in particular described in the dependent claims. In so far, reference is made to the above description of the first aspect of the invention and the preferred features and benefits are fully incorporated herein.

The valve block preferably is formed as a casting part, or formed from a plastic material which comprises the respective channels and conduits which are set into communication by means of the solenoid valves. Moreover, the valve block may comprise interfaces for attaching the solenoid valve arrangement to the car body or car frame, and also may comprise interfaces for supplying the solenoid valves with power. Typically, the valve block comprises two rows of solenoid valves, wherein only one row of solenoid valves is described herein. It shall, however, be understood that when the valve block includes two rows of solenoids, the solenoid valve arrangement also may comprise a second valve fixation device of the aforementioned type cooperating with the second row of solenoid valves received in respective second rows of recesses in the valve block.

According to a preferred embodiment of the solenoid valve arrangement, the valve block comprises a first guide for receiving said first leg and a second guide for receiving said second leg. The first and the second guides preferably form processed contacting surfaces which are within tolerances for receiving the first and second legs. Moreover, the first and second guides also preferably provide lateral support for the first and second legs, so that movement of the first and second legs to lateral directions is prevented. The first and second guides in the valve block may be formed as recesses, grooves, slots or the like. According to a further preferred embodiment, the valve block comprises a plurality of screw threaded bores corresponding to said plurality of through holes in said plate body for receiving screws provided through said through holes.

In accordance with various embodiments of the present invention, the solenoid valve arrangement (including the valve fixation device) should be considered as a part of a gearbox actuator or a vehicle transmission actuator (see claim 11). Said gearbox actuator is configured to actuate or move e.g., one or more shift forks to facilitate changing of gears or speed ratios within a gearbox. For instance, this gearbox is suitable to be mounted on a vehicle frame of a commercial vehicle. According to a third aspect of the invention, the above-mentioned problem is solved by a commercial vehicle (see claim 12) comprising a solenoid valve arrangement according to any of the previously described embodiments of a solenoid valve arrangement according to the second aspect of the invention. Such a commercial vehicle preferably comprises an automated manual transmission and a pneumatic braking system, as well as a pressurized air supply.

It shall be understood that the commercial vehicle according to the third aspect of the invention, the solenoid valve arrangement according to the second aspect of the invention and the valve fixation device according to the first aspect of the invention comprise similar and identical embodiments which are in particular described in the dependent claims. In so far, reference is made to the above description of the valve fixation device according to the first aspect of the invention and the solenoid valve arrangement according to the second aspect of the invention.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth. In the accompanying drawings:
- Fig. 1: shows a solenoid valve arrangement according to the prior art;
- Fig. 2: shows the solenoid valve arrangement of Fig. 1 in an exploded view;
- Fig. 3: shows a solenoid valve arrangement according to the invention in an exploded view;
- Fig. 4: shows a perspective view of a valve fixation device according to the invention; and
- Fig. 5: shows a cut view through the solenoid valve arrangement of Fig. 3 in a mounted state.

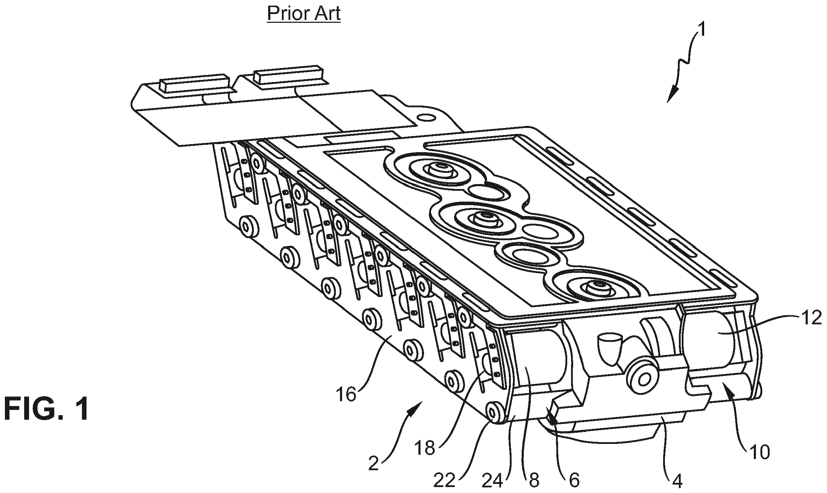

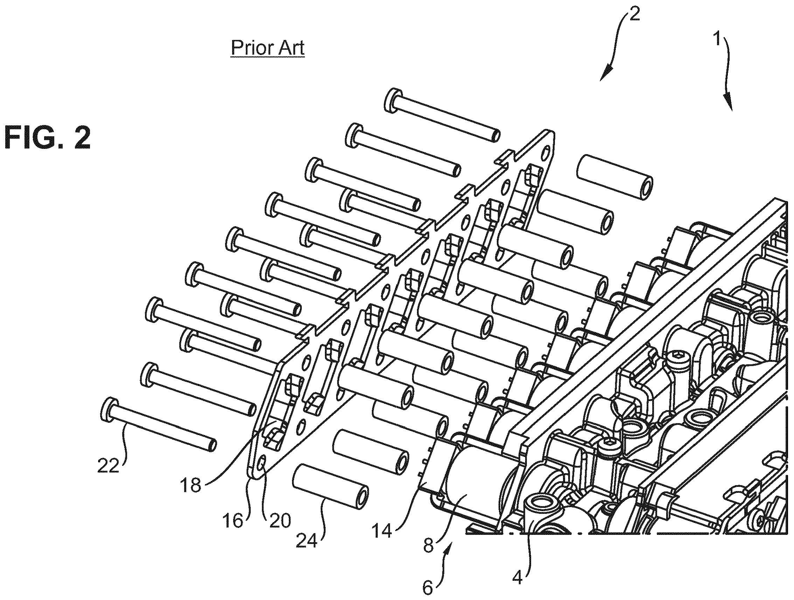

Figs. 1 and 2 describe a solenoid valve arrangement 1 with a valve fixation device 2 according to the prior art. The solenoid valve arrangement 1 according to the prior art comprises a valve block 4 with a first row 6 of solenoid valves 8, and a second row 10 of solenoid valves 12. The first and second rows 6, 10 of solenoid valves 8, 12 are arranged on opposite sides of the valve body 4 and seated in respective recesses of the valve body 4.

The exact arrangement can better be seen in Fig. 2. The valve body 4 is shown in a perspective view and seven solenoid valves 6 can be seen to be arranged at the valve body 4. Each solenoid valve 6 comprises an electric terminal 14 which is shown on the left-hand side of Fig. 2 at the solenoid valves 6. The solenoid valves 6 are seated in the valve block 4. For clamping the solenoid valves 8 in the first row 6 against the valve body 4, a valve fixation device 2 is provided. The valve fixation device 2 comprises a plate 16 with solenoid openings 18 through which the electrical terminal 14 is accessible. The plate 16 further comprises a plurality of through holes 20 (only one shown with reference sign) which are provided for receiving a respective screw 22 (again only one shown with reference sign) which is positionable through the through hole 20 and can be screwed into a respective (not shown) screw threaded bore in the valve block 4. For limiting the clamping force, each screw 22 is provided with a respective bushing 24 (again only one shown with reference sign in Fig. 2) which is positioned between the plate 16 and the valve block 4. Each screw 22 runs through the respective bushing 24 and is screwed to the valve block 4 with a respective port value.

Here, a drawback exists that during mounting, each of the screws and each of the bushings 24 must be aligned. In the embodiment shown, 14 screws 22 and 14 bushings 24 are used for the first row 6. For the second row 10 (not shown in Fig. 2) again 14 screws 22 and 14 bushings 24 are used. All these bushings 24 need to be placed on the respective screw 22 and placed properly between the plate 16 and the valve block 4. Each of the bushings 24 has two opposing surfaces, one surface abutting against the valve block 4 and one surface abutting against the plate 16. Thus, between the bushing 24 and the plate 16 as well as between the bushing 24 and the valve block 4, a respective tolerance is necessary which makes manufacturing complex. What is more is that each of the bushings 24 needs to be manufactured properly and sourced properly and also needs to be handled during mounting process.

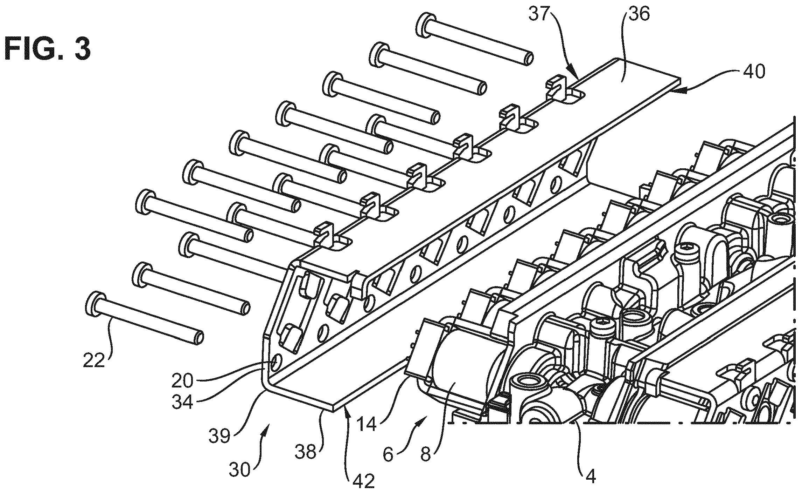

The invention (see Figs. 3 to 5) therefore proposes a valve fixation device 30 which is improved with respect to the prior art. In the following, similar and iden-tical elements are identified with the same reference signs as used before. In so far, reference also is made to the beforehand description of the prior art.

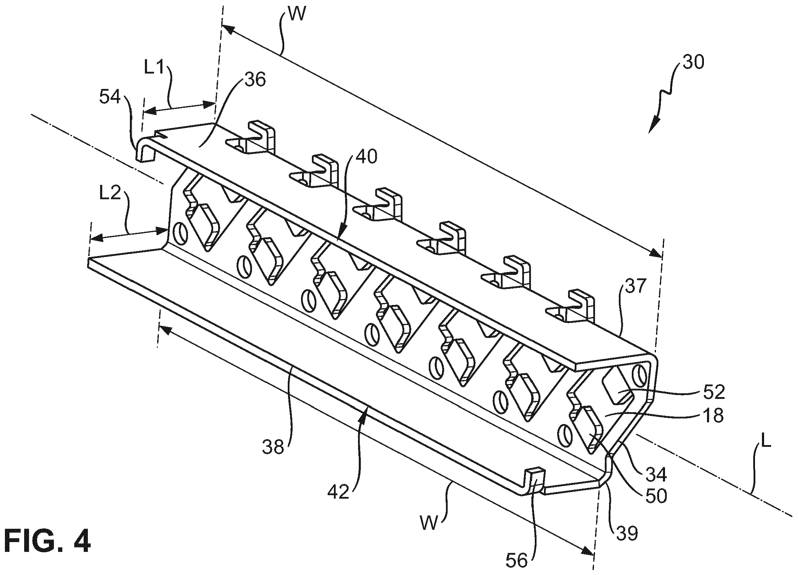

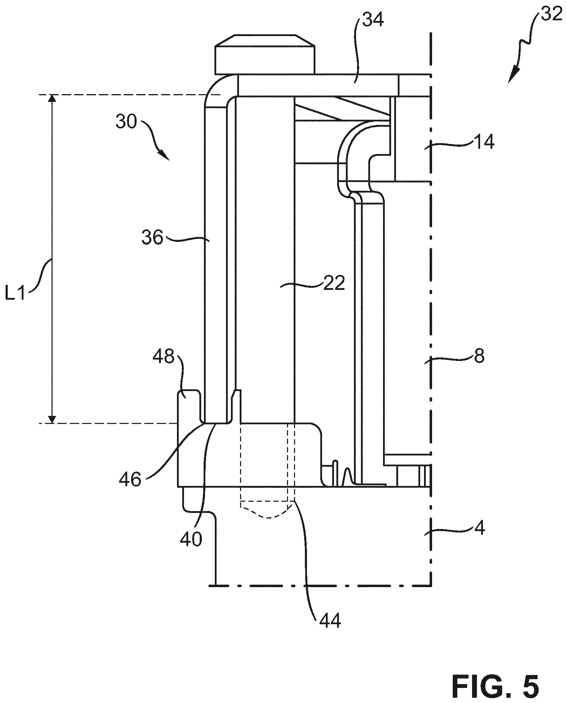

According to Fig. 3, again a valve block 4 is shown in the similar angle as in Fig. 2. Again, the first row 6 of solenoid valves 8 is shown with the electrical terminal 14 at their left-hand end. Fig. 3 shows an exploded view of a solenoid valve arrangement 32 according to the invention having the valve fixation device 30 according to the invention which alone also is shown in Fig. 4. Fig. 5 then shows a cut view through the solenoid valve arrangement 32 according to the invention in a mounted state.

The valve fixation device 30 comprises a plate body 34 which has a substantially rectangular or trapezoidal and longitudinal shape. The plate body 34 comprises a longitudinal axis L which, when mounted, is parallel to the rows 6, 10 of solenoid valves 8, 12. The plate body 34 comprises a plurality of solenoid openings 18 which substantially are formed in accordance with the solenoid openings 18 in the prior art (see Figs. 1 and 2). The solenoid openings 18, however, depend in particular on the shape and type of the solenoid valves 8, 10 which are used and may be different for different solenoid valves incorporated.

The valve fixation device 30 comprises a first leg 36 and a second leg 38 extending from the plate body 34. The first leg 36 is formed at the first side 37 of the plate body and the second leg 38 is formed at the second side 39 of the plate body 34. As can be inferred from Figs. 3 and 4, the plate body 34, the first leg 36 and the second leg 38 are integrally formed and in particular are made from one single metal sheet, in particular by means of bending. That is, the first leg 36 is bent at the first side of the plate body 34 with respect to Fig. 4 in a counter-clockwise direction with a bending axis parallel to the longitudinal axis L. The second leg 38 is bent at the second side 39 of the plate body 34, in a clockwise direction with respect to Fig. 4 about a bending axis which also is parallel to the longitudinal axis L. According to the present invention, both the first leg 36 and the second leg 38 extend substantially perpendicular to the plate body 34 and are substantially parallel to each other.

The plate body 34 has a width W along the longitudinal axis L. The first and second legs 36, 38 extend over the whole width W of the plate body 34, as can be seen in Fig. 4. It shall be contemplated that also first and second legs 36, 38 can be provided which are shorter than the whole width W, or multiple pairs of first and second legs 36, 38 can be provided, e.g. corresponding pairs for each of the solenoid openings 18.

The first leg 36 further comprises a first abutment surface 40 and the second leg 38 comprises a second abutment surface 42. The first and second abutment surfaces 40, 42 will abut against the valve block 4 when in the mounted state. This can be seen in Fig. 5. For clamping the solenoid valves 8, 12 against the valve block 4, the valve fixation device 32 is seated above the solenoid valves 8, 12 as shown in Fig. 3. The first and second abutment surfaces 40, 42 will come into contact with the valve block 4 and screws 22 have to be placed through the through holes 20 (see Fig. 3) and screwed to corresponding respective screw threaded bores 44 provided in the valve block 4. The first and second abutment surfaces 40, 42 extend also over the whole width W, even though this is not necessary, but this gives a full contact of the first and second legs 36, 38 and can balance out certain tolerances. Moreover, due to the first and second legs 36, 38 being substantially plate shaped, stiffness of the whole valve fixation device 32 is increased.

The first and second legs 36, 38 are received in respective first and second guides 46 (only one can be seen in Fig. 5) which give additional stability. The first guide 46 (cf. Fig. 5) comprises a rim 48 outside of the first leg 36 which prevents the first leg 36 from moving with respect to Fig. 5 to the left-hand side and thus bending outwardly.

The first and second legs 36, 38 having first and second lengths L1, L2, respectively, which are set to a value to limit the clamping force provided by the screws 22. Heads of the screws 22 are abutting against an upper surface of the plate body 34 (cf. Fig. 5) and press the valve fixation device 32 against the valve block 4. The first and second legs 36, 38 limit the extent to which the screws 22 may be screwed into the corresponding screw threaded bores 44 and thus also limit the clamping force.

At edges of the solenoid openings 18, first and second tongues 50, 52 (only two provided with reference signs in Fig. 4) are provided which abut against the electronic terminal 14 and push the solenoid valves 8, 12 into the valve block 4. The tongues 50, 52 are spring biased and therefore may slightly flex outwardly (i.e. with respect to Fig. 5 upwardly) to compensate for an excessive clamping force.

With respect to Fig. 4, first and second mounting tongues 54, 56 can be seen, which engage respective portions of the valve block and limit axial movement of the valve fixation device 34 into the direction of the longitudinal axis L when the valve fixation device 30 is seated over the solenoid valves 8, 12.

### List of reference signs (part of the specification):

- 1: solenoid valve arrangement 1 (prior art)
- 2: valve fixation device 2 (prior art)
- 4: valve block
- 6: first row
- 8: solenoid valves of first row
- 10: second row
- 12: solenoid valves of second row
- 14: electrical terminal
- 16: plate
- 18: solenoid opening
- 20: through hole
- 22: screw
- 24: bushing
- 30: valve fixation device (invention)
- 32: solenoid valve arrangement 32 (invention)
- 34: plate body
- 36: first leg
- 37: first side
- 38: second leg
- 39: second side
- 40: first abutment surface
- 42: second abutment surface
- 44: screw threaded bore
- 46: first guide
- 48: first rim
- 50: first lash
- 52: second lash
- 54: first mounting tongue
- 56: second mounting tongue
- L: longitudinal axis
- L1: first length
- L2: second length
- W: width

## Claims

1. A valve fixation device (30) for fixing solenoid valves (8, 12) to a valve block (4), in particular a valve block for automated manual transmission, the fixation device comprising
a plate body (34) having a plurality of solenoid openings (18) for granting access to said solenoid valves (8, 12),
the valve fixation device being **characterised by**:
at least a first leg (36) at a first side (37) of said plate body (34) integrally formed with said plate body (34) and extending substantially perpendicular with respect to said plate body (34), and
at least a second leg (38) at a second side (39) of said plate body (34) opposite said first side (37) integrally formed with said plate body (34) and extending substantially perpendicular with respect to said plate body (34),
wherein said first leg (36) comprises a first abutment surface (40) for abutting against said valve block (4) when in a mounted state, and said second leg (38) comprises a second abutment surface (42) for abutting against said valve block (4) when in a mounted state,
said first leg (36) having a first length (L1) and said second leg (38) having a second length (L2) for clamping said solenoid valves (8, 12) against said valve body (4), and wherein said at least first leg (36) and said at least second leg (38) are substantially parallel to each other.

2. The valve fixation device according to claim 1, wherein said plate body (34), first leg (36) and second leg (38) are formed from one metal plate by means of bending.

3. The valve fixation device according to any of the preceding claims, wherein said first and second legs (36, 38) extend substantially completely along said first and second sides (37, 39) of said plate body (34), respectively.

4. The valve fixation device according to any of the preceding claims, wherein said plate body (34) comprises spring biased lashes (50, 52) for contacting said solenoid valves (8, 12).

5. The valve fixation device according to any of the preceding claims, further comprising at least one through hole (20) for receiving a screw (22) for screwing said valve fixation device (30) to said valve block (4).

6. The valve fixation device according to claim 5, comprising a plurality of through holes (20) for receiving a screw (22) for screwing said valve fixation device (30) to said valve block (4), wherein said through holes (20) are formed in said plate body (34).

7. The valve fixation device according to claim 6, wherein said through holes (20) are arranged between said first and second legs (36, 38).

8. A solenoid valve arrangement (32) for automated manual transmission, comprising
a valve block (4),
a plurality of solenoid valves (8, 12) received in respective recesses of said valve block (4), and
a valve fixation device (30) according to any of claims 1 to 7 attached to said valve block (4) for fixing said solenoid valves (8, 12) to said valve block (4).

9. The solenoid valve arrangement according to claim 8, wherein said valve block (4) comprises a first guide (46) for receiving said first leg (36) and a second guide for receiving said second leg (38).

10. The solenoid valve arrangement according to claim 8 or 9, wherein said valve block (4) comprises a plurality of screw threaded bores (44) corresponding to said plurality of through holes (20) in said plate body (34) for receiving screws (22) provided through said through holes (20).

11. A gear box actuator comprising the solenoid valve arrangement (32) in accordance with any one of claims 8 to 10.

12. A commercial vehicle comprising a solenoid valve arrangement (32) according to any of claims 8 to 10.

## Patentansprüche

1. Ventilbefestigungsvorrichtung (30) zum Befestigen von Magnetventilen (8, 12) an einem Ventilblock (4), insbesondere einem Ventilblock für ein automatisiertes Schaltgetriebe, die Befestigungsvorrichtung umfassend
einen Plattenkörper (34), der eine Vielzahl von Magnetöffnungen (18) zum Gewähren eines Zugangs zu den Magnetventilen (8, 12) aufweist,
wobei die Ventilbefestigungsvorrichtung **gekennzeichnet ist durch:**
mindestens einen ersten Schenkel (36) an einer ersten Seite (37) des Plattenkörpers (34), der mit dem Plattenkörper (34) einstückig ausgebildet ist und sich im Wesentlichen senkrecht in Bezug auf den Plattenkörper (34) erstreckt, und
mindestens einen zweiten Schenkel (38) an einer zweiten Seite (39) des Plattenkörpers (34) gegenüber der ersten Seite (37), der mit dem Plattenkörper (34) einstückig ausgebildet ist und sich im Wesentlichen senkrecht in Bezug auf den Plattenkörper (34) erstreckt, wobei der erste Schenkel (36) eine erste Anlageoberfläche (40) zum Anlegen an den Ventilblock (4) in einem montierten Zustand umfasst und der zweite Schenkel (38) eine zweite Anlageoberfläche (42) zum Anlegen an den Ventilblock (4) in einem montierten Zustand umfasst,
wobei der erste Schenkel (36) eine erste Länge (L1) aufweist und der zweite Schenkel (38) eine zweite Länge (L2) zum Klemmen der Magnetventile (8, 12) an den Ventilkörper (4) aufweist, und wobei mindestens der erste Schenkel (36) und mindestens der zweite Schenkel (38) im Wesentlichen parallel zueinander verlaufen.

2. Ventilbefestigungsvorrichtung nach Anspruch 1, wobei der Plattenkörper (34), der erste Schenkel (36) und der zweite Schenkel (38) mittels Biegen aus einer Metallplatte ausgebildet sind.

3. Ventilbefestigungsvorrichtung nach einem der vorstehenden Ansprüche, wobei sich der erste und der zweite Schenkel (36, 38) im Wesentlichen vollständig entlang der ersten beziehungsweise der zweiten Seite (37, 39) des Plattenkörpers (34) erstrecken.

4. Ventilbefestigungsvorrichtung nach einem der vorstehenden Ansprüche, wobei der Plattenkörper (34) federvorgespannte Spiele (50, 52) zum Berühren der Magnetventile (8, 12) aufweist.

5. Ventilbefestigungsvorrichtung nach einem der vorstehenden Ansprüche, ferner umfassend mindestens ein Durchgangsloch (20) zum Aufnehmen einer Schraube (22) zum Schrauben der Ventilbefestigungsvorrichtung (30) an den Ventilblock (4).

6. Ventilbefestigungsvorrichtung nach Anspruch 5, umfassend eine Vielzahl von Durchgangslöchern (20) zum Aufnehmen einer Schraube (22) zum Schrauben der Ventilbefestigungsvorrichtung (30) an den Ventilblock (4), wobei die Durchgangslöcher (20) in dem Plattenkörper (34) ausgebildet sind.

7. Ventilbefestigungsvorrichtung nach Anspruch 6, wobei die Durchgangslöcher (20) zwischen dem ersten und dem zweiten Schenkel (36, 38) angeordnet sind.

8. Magnetventilanordnung (32) für ein automatisiertes Schaltgetriebe, umfassend
einen Ventilblock (4),
eine Vielzahl von Magnetventilen (8, 12), die in jeweiligen Aussparungen des Ventilblocks (4) aufgenommen sind, und
eine Ventilbefestigungsvorrichtung (30) nach einem der Ansprüche 1 bis 7, die an dem Ventilblock (4) zum Befestigen der Magnetventile (8, 12) an dem Ventilblock (4) angebracht ist.

9. Magnetventilanordnung nach Anspruch 8, wobei der Ventilblock (4) eine erste Führung (46) zum Aufnehmen des ersten Schenkels (36) und eine zweite Führung zum Aufnehmen des zweiten Schenkels (38) umfasst.

10. Magnetventilanordnung nach Anspruch 8 oder 9, wobei der Ventilblock (4) eine Vielzahl von Schraubgewindebohrungen (44) aufweist, die der Vielzahl von Durchgangslöchern (20) in dem Plattenkörper (34) entsprechen, zum Aufnehmen von Schrauben (22), die durch die Durchgangslöcher (20) hindurch bereitgestellt werden.

11. Getriebeaktuator, umfassend die Magnetventilanordnung (32) nach einem der Ansprüche 8 bis 10.

12. Nutzfahrzeug, umfassend eine Magnetventilanordnung (32) nach einem der Ansprüche 8 bis 10.

## Revendications

1. Dispositif de fixation de soupapes (30) pour fixer des soupapes à solénoïde (8, 12) à un bloc de soupapes (4), en particulier un bloc de soupapes pour une transmission manuelle automatisée, le dispositif de fixation comprenant
un corps de plaque (34) comportant une pluralité d'ouvertures pour solénoïdes (18) pour permettre l'accès auxdites soupapes à solénoïde (8, 12),
le dispositif de fixation de soupapes étant **caractérisé par** :
au moins une première patte (36) au niveau d'un premier côté (37) dudit corps de plaque (34) formée d'un seul tenant avec ledit corps de plaque (34) et s'étendant sensiblement perpendiculairement par rapport audit corps de plaque (34), et
au moins une seconde patte (38) sur un second côté (39) dudit corps de plaque (34) opposé audit premier côté (37) formée d'un seul tenant avec ledit corps de plaque (34) et s'étendant sensiblement perpendiculairement audit corps de plaque (34), dans lequel ladite première patte (36) comprend une première surface de butée (40) pour venir en butée contre ledit bloc de soupapes (4) lorsqu'il est dans un état monté, et ladite seconde patte (38) comprend une seconde surface de butée (42) pour venir en butée contre ledit bloc de soupapes (4) lorsqu'il est dans un état monté,
ladite première patte (36) ayant une première longueur (L1) et ladite seconde patte (38) ayant une seconde longueur (L2) pour serrer lesdites soupapes à solénoïde (8, 12) contre ledit bloc de soupapes (4), et dans lequel ladite au moins une première patte (36) et ladite au moins une seconde patte (38) sont sensiblement parallèles l'une à l'autre.

2. Dispositif de fixation de soupapes selon la revendication 1, dans lequel lesdits corps de plaque (34), première patte (36) et seconde patte (38) sont formés à partir d'une plaque métallique par pliage.

3. Dispositif de fixation de soupapes selon l'une quelconque des revendications précédentes, dans lequel lesdites première et seconde pattes (36, 38) s'étendent sensiblement complètement le long desdits premier et second côtés (37, 39) dudit corps de plaque (34), respectivement.

4. Dispositif de fixation de soupapes selon l'une quelconque des revendications précédentes, dans lequel ledit corps de plaque (34) comprend des attaches sollicitées par ressort (50, 52) pour entrer en contact avec lesdites soupapes à solénoïde (8, 12).

5. Dispositif de fixation de soupapes selon l'une quelconque des revendications précédentes, comprenant en outre au moins un trou traversant (20) pour recevoir une vis (22) pour visser ledit dispositif de fixation de soupapes (30) audit bloc de soupapes (4).

6. Dispositif de fixation de soupapes selon la revendication 5, comprenant une pluralité de trous traversants (20) pour recevoir une vis (22) pour visser ledit dispositif de fixation de soupapes (30) audit bloc de soupapes (4), dans lequel lesdits trous traversants (20) sont formés dans ledit corps de plaque (34).

7. Dispositif de fixation de soupapes selon la revendication 6, dans lequel lesdits trous traversants (20) sont disposés entre lesdites première et seconde pattes (36, 38).

8. Agencement de soupapes à solénoïde (32) pour une transmission manuelle automatisée, comprenant
un bloc de soupapes (4),
une pluralité de soupapes à solénoïde (8, 12) reçues dans des évidements respectifs dudit bloc de soupapes (4), et
un dispositif de fixation de soupapes (30) selon l'une quelconque des revendications 1 à 7, fixé audit bloc de soupapes (4) pour fixer lesdites soupapes à solénoïde (8, 12) audit bloc de soupapes (4).

9. Agencement de soupapes à solénoïde selon la revendication 8, dans lequel ledit bloc de soupapes (4) comprend un premier guide (46) pour recevoir ladite première patte (36) et un second guide pour recevoir ladite seconde patte (38).

10. Agencement de soupapes à solénoïde selon la revendication 8 ou 9, dans lequel ledit bloc de soupapes (4) comprend une pluralité d'alésages filetés (44) correspondant à ladite pluralité de trous traversants (20) dans ledit corps de plaque (34) pour recevoir des vis (22) fournies à travers lesdits trous traversants (20).

11. Actionneur de boîte de vitesses comprenant l'agencement de soupapes à solénoïde (32) selon l'une quelconque des revendications 8 à 10.

12. Véhicule utilitaire comprenant un agencement de soupapes à solénoïde (32) selon l'une quelconque des revendications 8 à 10.
